# EUROPÄISCHE PATENTSCHRIFT

(11) **EP 1 388 518 B1**
(45) Veröffentlichungstag und Bekanntmachung des Hinweises auf die Patenterteilung: **21.12.2005**
(21) Anmeldenummer: 03017884.2
(22) Anmeldetag: 05.08.2003
(51) Int. Cl.: B66F 9/075, B62D 51/02

(54) **Kommissioniergerät**
Commissioning apparatus
Chariot de manutention

(30) Priorität: 08.08.2002 DE 10236445
(43) Veröffentlichungstag der Anmeldung: 11.02.2004
(73) Patentinhaber: STILL S.A.R.L., 77107 Meaux Cedex (FR)
(72) Erfinder: Abonnet, Jacqes, 58200 Cosne/Loire (FR); Gilet, Olivier, 59880 Saint Saulve (FR)
(74) Vertreter: Lang, Michael

(56) Entgegenhaltungen:
- EP-A- 0 570 658
- DE-A- 19 618 906
- DE-A- 19 743 735
- DE-U- 29 806 994
- US-A- 5 595 259

## Beschreibung

Die Erfindung betrifft ein Kommisioniergerät, insbesondere Niederhubkommisionierer, mit einem Fahrerstandplatz, einer erhöhten Standfläche, einer mit Griffstellen versehenen Aufstiegshilfe und einem zwischen Antriebsteil und Lastteil angeordneten Schutzgitter.

Derartige Fahrzeuge sind zum Beispiel aus der DE 19 618 906 A oder aus der DE 29 806 994 U bekannt und werden beim Kommisionieren von Waren verwendet, wobei der Fahrer diese aus der ersten oder zweiten Ebene eines Regals entnimmt und in der auf der Lastaufnahmevorrichtung des Kommisionierers befindlichen Palette ablegt. Zum Schutz des Fahrerstandplatzes vor den auf der Palette abgelegten Waren ist an der der Lastaufnahmevorrichtung zugewandten Seite des Fahrzeugaufbaus meist ein Schutzgitter angeordnet. Der Fahrer steht zur Entnahme von Waren aus der ersten Ebene des Regals meist neben dem Kommissionierer, während er, um Waren auf der zweiten Regalebene zu erreichen, auf den der Lastaufnahmevorrichtung zugewandten Teil des Aufbaus steigt. Diese Aufbaustandfläche besteigt er zumeist vom Fahrerstandplatz aus, von dem aus er das Fahrzeug steuert. Um dem Fahrer den Aufstieg auf die Aufbaustandfläche zu erleichtern, sind im Bereich des Fahrerstandplatzes zumeist Trittstufen angeordnet. Zudem können Aufstiegshilfen vorgesehen sein, die es dem Fahrer erlauben, sich beim Aufsteigen festzuhalten, beispielsweise in Form von auf dem Aufbau angebrachten Griffen oder Griffstangen. Diese können jedoch die Bewegungsmöglichkeiten des Fahrers auf dem Aufbau erheblich einengen und sogar zu einer Gefährdung des Fahrers führen, da dieser darüber stolpern kann. Diese Gefahr kann durch auf dem Aufbau abgelegte Gegenstände, wie beispielsweise Frachtunterlagen, Kleidungs- oder Ausrüstungsgegenstände, noch verstärkt werden. Die Arbeit des Fahrers wird zusätzlich behindert, wenn er Frachtunterlagen mit sich führen und auf diesen Eintragungen vornehmen muss. Zum Bearbeiten dieser Unterlagen benötigt er beide Hände, weshalb er sich nicht mehr am Fahrzeug festhalten kann.

Der Erfindung liegt daher die Aufgabe zugrunde, ein Kommisioniergerät, insbesondere Niederhubkommisionierer, mit einem Fahrerstandplatz, einer erhöhten Standfläche, einer mit Griffstellen versehenen Aufstiegshilfe und einem zwischen Antriebsteil und Lastteil angeordneten Schutzgitter zu schaffen, der dem Fahrer des Kommissioniergeräts einen einfachen Aufstieg sowie sichere und einfache Bewegung auf der Aufbaustandfläche ermöglicht.

Diese Aufgabe wird erfindungsgemäß dadurch gelöst, dass die Aufstiegshilfe als Teil des Schutzgitters ausgeführt ist. Dadurch wird das Anbringen von separaten Aufstiegshilfen auf der Aufbaustandfläche vermieden und eine ebene, durchgängige Fläche geschaffen. Der Fahrer wird somit bei seinen Bewegungen möglichst wenig behindert oder gefährdet. Zusätzlich ermöglicht diese Bauweise eine besonders einfache und wirtschaftliche Fertigung, da keine separaten Aufstiegshilfen gefertigt und am Kommisioniergerät befestigt werden müssen.

In einer besonders vorteilhaften Ausgestaltung ist das Schutzgitter aus mindestens einem im Wesentlichen U-förmig gebogenen aus mindestens einem Rohr oder Profil gefertigten Teil und aus mindestens einem zwischen den Schenkeln des U-förmigen Teils angeordneten, aus Blech gefertigten Teil gebildet. Die Gestaltung des U-förmigen Teils aus mindestens einem Rohr ermöglicht eine besonders einfache Fertigung des die Hauptlast aufnehmenden und an den Aufbau des Kommisioniergeräts weitergebenden Teils des Schutzgitters, da dieser aus vorgefertigten Rohren, beispielsweise durch Biegen und Verschweißen, herstellbar ist. Um ein Herunterfallen der Ladung in Richtung der Aufbaustandsfläche des Kommisioniergeräts zu vermeiden, ist eine möglichst großflächige Trennfläche notwendig, die vorteilhafterweise durch das zwischen den tragenden Rohren angebrachte Blechteil des Schutzgitters gebildet wird. Dadurch ist eine einfache Fertigung bei gleichzeitig gutem Schutz gewährleistet.

Weiterhin weist das U-förmige Teil des Schutzgitters in einer besonders vorteilhaften Ausgestaltung an mindestens einer Seite eine zum Fahrerstandplatz ragende Aufstiegshilfe in Form einer Ausbuchtung auf. Eine solche Ausbuchtung ist einfach zu fertigen und bietet dem Fahrer gut zu erreichende Grifflächen für den Aufstieg.

Es ist zudem besonders vorteilhaft, die Ausbuchtung in einer trapezförmigen Form zu gestalten, wobei die parallelen Seiten des Trapezes annähernd parallel zur Fahrzeughochachse ausgerichtet sind, da somit eine beim Aufstieg vorteilhafte senkrechte Grifffläche gegeben, ohne die Verletzungsgefahr durch scharfe Ecken und Kanten bei versehentlichem Anstoßen des Fahrers an die Aufstiegshilfe unnötig zu vergößem.

Durch eine Ausrichtung der Ebene der trapezförmigen Ausbuchtung annähernd senkrecht zu einer horizontalen Ebene und in einem Winkel von weniger als 90° zur Ebene des Schutzgitters kann der Fahrer diese vorteilhafterweise von seinem Standplatz in der Mitte des Fahrerstandplatzes gut erreichen.

Vorteilhafterweise ist auf jeder Seite des Schutzgitters genau eine zum Fahrerstandplatz ragende Aufstiegshilfe vorhanden, so dass bei einfachem Aufbau der Fahrer auf der rechten wie auf der linken Fahrzeugseite gleichermaßen gut arbeiten kann.

In einer besonders vorteilhaften Ausgestaltung sind am Schutzgitter, insbesondere an der trapezförmigen Ausbuchtung, zusätzliche Anbauteile, insbesondere Schreibunterlagen, befestigbar. Dadurch sind diese in Reichweite des Fahrers und er benötigt keine zusätzliche Hand, um diese zu halten.

In einer vorteilhaften Ausgestaltung weist das U-förmige Teil des Schutzgitters an der oberen rohrförmigen Querverbindung ein Mittel zum Aufhängen von Gegenständen, insbesondere Kleidung, auf. Dadurch wird die Standfläche von abgelegten Gegenständen, wie Bekleidungsteilen oder Taschen, freigehalten und ist somit für den Fahrer sicherer begehbar.

Weitere Vorteile und Einzelheiten der Erfindung werden anhand des in den schematischen Figuren dargestellten Ausführungsbeispiels näher erläutert. Dabei zeigt
- Figur 1: ein Kommisioniergerät mit einem erfindungsgemäßen Schutzgitter mit einer Aufstiegshilfe,
- Figur 2: ein erfindungsgemäßes Schutzgitter mit einer Aufstiegshilfe vom Fahrerstandplatz aus gesehen,
- Figur 3: ein erfindungsgemäßes Schutzgitter mit einer Aufstiegshilfe von oben gesehen,
- Figur 4: ein erfindungsgemäßes Schutzgitter mit einer Aufstiegshilfe in Seitenansicht,

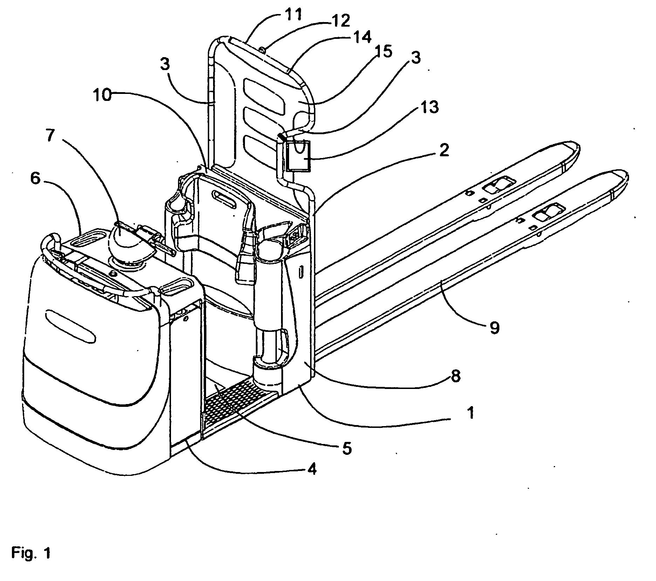

In Figur 1 ist ein Kommissioniergerät 1 mit einem erfindungsgemäßen Schutzgitter 2 mit einer Aufstiegshilfe 3 dargestellt. Ein Antriebsteil 4 des Kommissionierers 1 weist einen Fahrerstandplatz 5 mit einem Steuerungsteil 6 auf, der die Steuerungs- und Bedienelemente 7 trägt und Batterien für den Fahrantrieb beinhaltet. Auf der gegenüberliegenden Seite des Fahrerstandplatzes 5 ist ein Lastteil 8 angeordnet, der Vorrichtungen zum Heben und Senken einer Last aufweist. Die Last, wie beispielsweise Paletten oder Transportkisten, wird auf einer Gabel 9 aufgenommen. Damit der Fahrer Waren in der zweiten Regalebene erreichen kann, ist die Gehäuseoberseite des Lastteils als Aufbaustandfläche 10 begehbar. Auf der Sitrnseite des Lastteilgehäuses 8 ist ein erfindungsgemäßes Schutzgitter 2 angebracht. Dieses besitzt im Anwendungsbeipiel zwei trapezförmige Ausbuchtungen 3 und an der oberen Querverbindung 11 des Schutzgitters 2 einen Haken 12 zum Aufhängen von Gegenständen. Am Schutzgittter 2 ist zudem eine Schreibunterlage 13 befestigt.

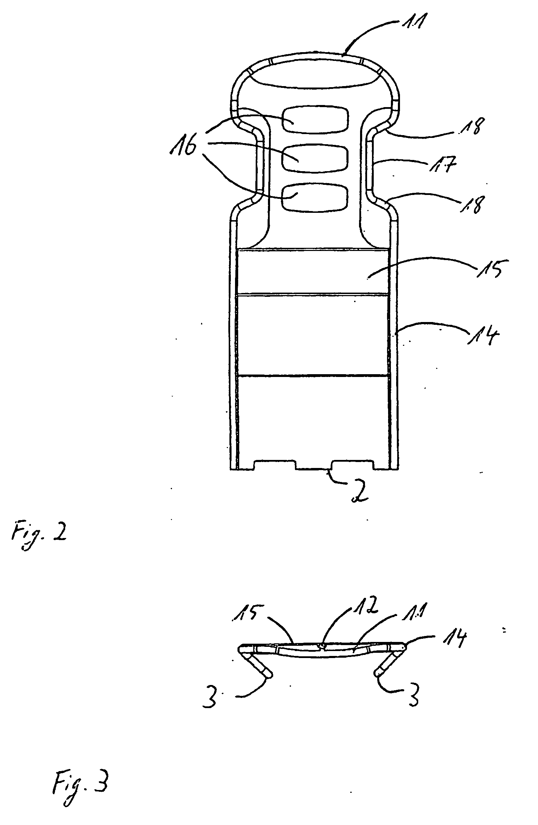

In Figur 2 ist das erfindungsgemäße Schutzgitter 2 in der Ansicht vom Fahrerstandplatz 5 dargestellt. Dieses wird im Ausführungsbeispiel von dem äußeren, U-förmigen Teil 14, der aus einem Rohr mit rundem Querschnitt gefertigt ist, und dem inneren, aus einem Blechteil gefertigten Teil 15 gebildet. Der äußere, U-förmige Teil 14 dient als Rahmen, der die Lasten, die von an das innere Blechteil 15 angelehnten Ladegütem stammen, aufnimmt und an den Lastteil 8 des Kommisionierers 1 weitergibt. Die Fertigung kann mit den für solche Bauteile üblichen Verfahren, wie beispielsweise Biegen oder Löten, Schweißen oder Verschrauben von Einzelstücken erfolgen. Auch ist die Form der Rohrteile ist nicht auf den im Ausführungsbeispiel gezeigten runden Querschnitt beschränkt, sondern auch andere Querschnittsformen, wie beispielsweise elliptische oder quadratische Querschnitte oder T-Profile, sind denkbar. Im Hinblick auf eine mögliche Verletzungsgefahr wird jedoch im Allgemeinen ein abgerundeter Querschnitt bevorzugt verwendet werden.

In dem Blechteil 15 sind Aussparungen 16 vorgesehen, um dem Fahrer beispielsweise beim Aufnehmen einer Palette die Sicht nach hinten zu ermöglichen. Dieses Blechteil 15 ist mit der Bearbeitung von Blechteilen üblichen Verfahren, wie beispielsweise Biegen, Abkanten, Stanzen, Laserschneiden, mit wesentlich geringerem Aufwand zu fertigen als aus Rohren oder Profilen zusammengesetzte Schutzgitter. Die Verbindung von Blechteil 15 und Rahmen 14 kann durch eines der für solche Bauteile üblichen Verfahren wie Schweißen, Schrauben, Nieten, Löten oder Kleben erfolgen.

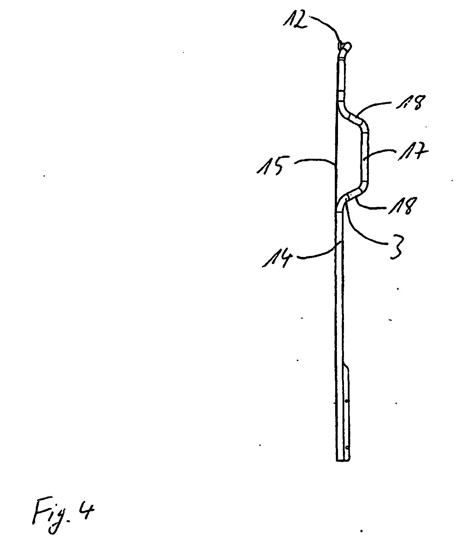

Figur 3 und Figur 4 zeigen das erfindungsgemäße Schutzgitter 2 von oben beziehungsweise in der Seitenansicht. In diesen Figuren ist gut zu erkennen, wie die Ebenen der trapezförmigen Ausbuchtungen der Aufstiegshilfe 3 senkrecht zu einer horizontalen Ebene und in einem Winkel von ungefähr 45° zur Ebene des Schutzgitters 2 zum Fahrer hin orientiert sind. Durch diese bevorzugte Ausführung ist die Aufstiegshilfe 3 für den Fahrer von seinem Standplatz 5 aus leicht erreichbar. Zudem ist die Griffläche 17 damit innerhalb des Fahrzeugquerschnitts positioniert, so dass auch bei beengten Platzverhältnissen eine sichere Benutzung möglich ist. Die trapezförmige Ausgestaltung bietet eine große senkrechte Grifffläche 17, aber auch zwei unter annähernd 45° zur Aufstandsfläche des Fahrzeugs orientierte Griffflächen 18. Damit findet der Fahrer in jeder Position sicheren Halt. Bevorzugt werden, wie im gezeigten Ausführungsbeispiel, die Ausbuchtungen 3 in einer abgerundeten Ausführung ausgebildet sein, um die Verletzungsgefahr für den Fahrer bei einem versehentlichen Anstoßen an die Ausbuchtung 3 zu minimieren.

Wenn, wie im vorliegenden Ausführungsbeispiel, auf jeder Seite des Kommisionierers je eine Ausbuchtung 3 angeordnet ist, ist der Aufstieg nach beiden Seiten hin gleich einfach.

Als Beispiel für die Anbringung von Anbauteilen an der Aufstiegshilfe 3 ist im Ausführungsbeispiel in Figur 1 eine Schreibunterlage 13 an der Aufstiegshilfe 3 befestigt. Es sind aber auch andere Anbauteile, wie beispielsweise ein Display, Bedienelemente der Fahrsteuerung, ein Funksprechgerät etc. denkbar. Dadurch wird die Aufbaustandfläche 10 von diesen Gegenständen freigehalten und der Fahrer kann sich dort ungehindert bewegen. Die Anbringung von Anbauteilen 13 an der trapezförmigen Ausbuchtung 3 wird zweckmäßigerweise in einem Bereich erfolgen, der nicht bevorzugt als Grifffläche benutzt wird. Insbesondere sind hierfür die Bereiche mit starken Biegungen, wie in Figur 1 dargestellt, geeignet. Die Anbringung der Anbauteile 13 kann auch schwenkbar gestaltet sein, so dass der Fahrer sowohl vom Fahrerstandplatz 5 aus als auch auf der Standfläche 10 optimalen Zugang hat. Die Anbauteile 13 können je nach Anwendungszweck fest montiert oder abnehmbar gestaltet sein, wobei die Verbindung über die für solche Anwendungen gebräuchlichen Techniken, wie Schrauben, Stecken, Klemmen, Schweißen erfolgen kann.

Wie in Figur 4 dargestellt, wird im Ausführungsbeispiel an der oberen Querverbindunge 11 des Schutzgitterrahmens ein Haken 12 als Mittel zum Aufhängen von Gegenständen, insbesondere Kleidung, verwendet, um die Aufbaustandfläche 10 von störenden Gegenständen, wie beispielsweise Taschen oder Kleidungsstücken des Fahrers, freizuhalten. Es können dazu aber auch andere geeignete Vorrichtungen, beispielsweise Ösen, Klemmleisten, etc. verwendet werden.

## Patentansprüche

1. Kommisioniergerät (1), insbesondere Niederhubkommisionierer, mit einem Fahrerstandplatz (5), einer erhöhten Standfläche (10), einer mit Griffstellen versehenen Aufstiegshilfe (3) und einem zwischen Antriebsteil (4) und Lastteil (8) angeordneten Schutzgitter (2), **dadurch gekennzeichnet, dass** die Aufstiegshilfe (3) als Teil des Schutzgitters (2) ausgeführt ist.

2. Kommisioniergerät nach Anspruch 1, **dadurch gekennzeichnet, dass** das Schutzgitter (2) aus mindestens einem im Wesentlichen U-förmigen aus mindestens einem Rohr oder Profil gefertigten Teil (14) und aus mindestens einem zwischen den Schenkeln des U-förmigen Teils angeordneten, aus Blech gefertigten Teil (15) gebildet ist.

3. Kommisioniergerät nach Anspruch 1 oder 2, **dadurch gekennzeichnet, dass** das aus einem im Wesentlichen U-förmig gebogenen aus mindestens einem Rohr oder Profil gefertigte Teil (14) des Schutzgitters (2) an mindestens einer Seite eine zum Fahrerstandplatz (5) ragende Aufstiegshilfe (3) in Form einer Ausbuchtung aufweist.

4. Kommisioniergerät nach einem der Ansprüche 1 bis 3, **dadurch gekennzeichnet, dass** die Ausbuchtung (3) eine trapezförmige Form aufweist, wobei die parallelen Seiten des Trapezes annähernd parallel zur Fahrzeughochachse ausgerichtet sind.

5. Kommisioniergerät nach einem der Ansprüche 1 bis 4, **dadurch gekennzeichnet, dass** die Ebene der trapezförmigen Ausbuchtung annähernd senkrecht zu einer horizontalen Ebene und in einem Winkel von weniger als 90° zur Ebene des Schutzgitters (2) ausgerichtet ist.

6. Kommisioniergerät nach einem der Ansprüche 1 bis 5, **dadurch gekennzeichnet, dass** das Schutzgitter (2) auf jeder Seite des Kommisioniergeräts (1) genau eine zum Fahrerstandplatz (5) ragende Aufstiegshilfe (3) aufweist.

7. Kommisioniergerät nach einem der Ansprüche 1 bis 6, **dadurch gekennzeichnet, dass** am Schutzgitter (2), insbesondere an der trapezförmigen Ausbuchtung, zusätzliche Anbauteile (13), insbesondere Schreibunterlagen, befestigbar sind.

8. Kommisioniergerät nach einem der Ansprüche 1 bis 7, **dadurch gekennzeichnet, dass** das U-förmige Teil des Schutzgitters (2) an der oberen Querverbindung (11) ein Mittel (12) zum Aufhängen von Gegenständen, insbesondere Kleidung, aufweist.

## Claims

1. Order picker (1), in particular a low-reach order picker, having a driver's platform (5), a raised standing area (10), a boarding aid (3) provided with gripping points and a protective railing (2) arranged between the drive part (4) and the load part (8), **characterized in that** the boarding aid (3) is designed as part of the protective railing (2).

2. Order picker according to Claim 1, **characterized in that** the protective railing (2) is formed from at least one substantially U-shaped part (14), which is produced from at least one tube or profile, and from at least one part (15) which is produced from a metal sheet and is arranged between the limbs of the U-shaped part.

3. Order picker according to Claim 1 or 2, **characterized in that** the part (14), which is bent substantially in the form of a U and is produced from at least one tube or profile, of the protective railing (2) has, on at least one side, a boarding aid (3) projecting towards the driver's platform (5) in the form of a curved section.

4. Order picker according to one of Claims 1 to 3, **characterized in that** the curved section (3) has a trapezoidal shape, the parallel sides of the trapezoid being aligned approximately parallel to the vertical axis of the vehicle.

5. Order picker according to one of Claims 1 to 4, **characterized in that** the plane of the trapezoidal curved section is aligned approximately perpendicularly with respect to a horizontal plane and at an angle of less that 90° with respect to the plane of the protective railing (2).

6. Order picker according to one of Claims 1 to 5, **characterized in that** the protective railing (2) has precisely one boarding aid (3) projecting towards the driver's platform (5) on each side of the order picker (1).

7. Order picker according to one of Claims 1 to 6, **characterized in that** additional add-on parts (13), in particular notepads, can be fixed to the protective railing (2), in particular to the trapezoidal curved section.

8. Order picker according to one of Claims 1 to 7, **characterized in that** the U-shaped part of the protective railing (2) has a means (12) for suspending articles, in particular clothing, on the upper transverse connection (11).

## Revendications

1. Appareil de préparation de commandes (1), notamment chariot élévateur de préparation de commandes à faible levée, comprenant une plate-forme de conducteur (5), une surface de support élevée (10), un système d'aide à l'accès (3) pourvu de zones de préhension et une grille de protection (2) disposée entre la partie d'entraînement (4) et la. partie de charge (8), **caractérisé en ce que** le système d'aide à l'accès (3) est réalisé sous forme de partie de la grille de protection (2).

2. Appareil de préparation de commandes selon la revendication 1, **caractérisé en ce que** la grille de protection (2) est formée d'au moins une partie (14) essentiellement en forme de U constituée d'au moins un tube ou un profilé, et d'au moins une partie (15) en tôle disposée entre les branches de la partie en forme de U.

3. Appareil de préparation de commandes selon la revendication 1 ou 2, **caractérisé en ce que** la partie (14) de la grille de protection (2) constituée d'au moins un tube ou un profilé cintré essentiellement en forme de U présente sur au moins un côté un système d'aide à l'accès (3) en forme de renflement saillant vers la plate-forme de conducteur (5).

4. Appareil de préparation de commandes selon l'une quelconque des revendications 1 à 3, **caractérisé en ce que** le renflement (3) présente une forme trapézoïdale, les côtés parallèles du trapèze étant orientés approximativement parallèlement à l'axe vertical du véhicule.

5. Appareil de préparation de commandes selon l'une quelconque des revendications 1 à 4, **caractérisé en ce que** le plan du renflement de forme trapézoïdale est orienté approximativement perpendiculairement à un plan horizontal et suivant un angle inférieur à 90° par rapport au plan de la grille de protection (2).

6. Appareil de préparation de commandes selon l'une quelconque des revendications 1 à 5, **caractérisé en ce que** la grille de protection (2) présente, de chaque côté de l'appareil de préparation des commandes (1), exactement un système d'aide à l'accès (3) saillant vers la plate-forme de conducteur (5).

7. Appareil de préparation de commandes selon l'une quelconque des revendications 1 à 6, **caractérisé en ce que** des pièces rapportées (13) supplémentaire, notamment des supports d'écriture, peuvent être fixé(e)s sur la grille de protection (2), notamment sur le renflement de forme trapézoïdale.

8. Appareil de préparation de commandes selon l'une quelconque des revendications 1 à 7, **caractérisé en ce que** la partie en forme de U de la grille de protection (2) présente sur la connexion transversale supérieure (11) un moyen (12) pour accrocher des objets, notamment des vêtements.
